# EUROPÄISCHE PATENTSCHRIFT

(11) **EP 3 383 580 B1**
(45) Veröffentlichungstag und Bekanntmachung des Hinweises auf die Patenterteilung: **23.08.2023**
(21) Anmeldenummer: 16794983.3
(22) Anmeldetag: 08.11.2016
(51) Int. Cl.: B23Q 3/06

(54) **VORRICHTUNG ZUM SPANNEN MEHRERER WERKSTÜCKE AUF EINEM TEILAPPARAT EINER WERKZEUGMASCHINE**
APPARATUS FOR CLAMPING A PLURALITY OF WORKPIECES ON AN INDEXING ATTACHMENT OF A MACHINE TOOL
DISPOSITF DE BRIDAGE DE PLUSIEURS PIÈCES À USINER SUR UNE TÊTE D'INDEXATION D'UNE MACHINE OUTIL

(30) Priorität: 03.12.2015 CH 17682015; 26.08.2016 CH 10942016
(43) Veröffentlichungstag der Anmeldung: 10.10.2018
(73) Patentinhaber: Röthlisberger, Oskar, 3054 Schüpfen (CH)
(72) Erfinder: Röthlisberger, Oskar, 3054 Schüpfen (CH)
(74) Vertreter: Gachnang, Hans Rudolf
(86) Internationale Anmeldenummer: PCT/EP2016/076914
(87) Internationale Veröffentlichungsnummer: WO 2017/092975

(56) Entgegenhaltungen:
- EP-A2- 0 328 792
- DE-A1- 3 237 705
- DE-U- 1 815 274
- US-A- 2 662 433

## Beschreibung

Gegenstand der Erfindung ist eine Vorrichtung zum Spannen mehrerer Werkstücke auf einem Teilapparat einer Werkzeugmaschine gemäss Oberbegriff des Patentanspruchs 1. Für die Bearbeitung von Werkstücken, insbesondere die spanabhebende Bearbeitung in CNC-Werkzeugmaschinen müssen die Werkstücke beispielsweise auf einem sogenannten Teilapparat fixiert werden. Mit dem Teilapparat oder einem andersartigen Befestigungselement können die Werkstücke dann in verschiedene Bearbeitungs-Positionen um die Drehachse gedreht werden, um mit einem spanabhebenden Werkzeug die entsprechende Bearbeitung aus verschiedenen Richtungen vorzunehmen. Nach Beendigung von verschiedenen Arbeitsvorgängen muss das Werkstück dem Teilapparat bzw. einem dort vorhandenen Schraubstock von der Werkzeugmaschine abgenommen werden und ein neues Werkstück für die Bearbeitung eingespannt werden. Das Einspannen und vorhergehende Positionieren eines neuen Werkstücks führt zu einem Betriebsunterbruch der Maschine und folglich zu Kosten.

Aus der EP 0 328 792, auf welcher der Oberbegriff von Anspruch 1 basiert, ist eine Mehrfach-Spannvorrichtung zum Spannen in Nuten des Maschinentisches von NC-gesteuerten Werkzeugmaschinen bekannt. Die Mehrfach-Spannvorrichtung wird mittels Schrauben auf dem Maschinentisch festgehalten. Zum Verschieben der einzelnen Backen müssen diese Schrauben gelöst werden, danach können die einzelnen Backen, die an Nutensteinen geführt sind, entlang der Nuten im Maschinentisch verschoben, danach können die Backen gegeneinander verspannt werden (mit Schraube 8) und schlussendlich muss vor der Weiterführung der Bearbeitung der eingespannten Werkstücke jede einzelne Backe wieder mit den Schrauben am Maschinentisch befestigt werden. Diese Spannvorrichtung ist einzig und allein benutzbar durch Festspannen auf dem Maschinentisch und die darin gespannten Werkstücke können erst nach Lösen diverser Schrauben und erneutem Ausrichten und Verspannen weiterbearbeitet werden. Es handelt sich also um eine Mehrfach-Spannvorrichtung, die zwar, wie das Wort sagt, mehrere Werkstücke aufnehmen kann; diese sind aber nur in einer einzigen Spannlage bearbeitbar.

Aus der DE-U-1815274 ist weiter eine Spannvorrichtung zum Befestigen auf dem Maschinentisch bekannt. Die zu spannenden Werkzeuge können durch geführte Spannbacken miteinander verspannt werden. Es ist nach dem Festspannen der Werkstücke nur eine Bearbeitung aus einer Richtung möglich. Für die Bearbeitung einer anderen Fläche oder in einem anderen Winkel müssen die Werkstücke erneut eingespannt und mit Aufwand ausgerichtet werden.

Aus der DE 3237705 ist eine Gleitkeilspannvorrichtung bekannt, die wie zuvor auf dem Maschinentisch einer Werkzeugmaschine an den dort vorhandenen Nuten befestigt wird. Einmal eingespannte Werkstücke können nur in der eingespannten Stellung bearbeitet werden. Um andere Flächen der Werkstücke zu bearbeiten, müssen letztere erneut eingespannt und ausgerichtet werden.

Auch die US 2,662,433 bezieht sich auf ein Spannelement zum Einspannen mehrerer Werkstücke. Die Spannvorrichtung selbst wird auf dem Maschinentisch einer Werkzeugmaschine befestigt. Vor der Verstellung der eingespannten Werkstücke für die weitere Bearbeitung müssen diese von der Spannvorrichtung gelöst, und in der gewünschten neuen Lage eingespannt und ausgerichtet werden.

Eine Aufgabe der vorliegenden Erfindung besteht nun darin, die zeitliche Dauer für einen Werkstückwechsel auf einer CNC-Werkzeugmaschine zu verringern. Mit anderen Worten, es geht darum, die Rüstzeit zwischen den Bearbeitungsintervallen zu reduzieren.

Gelöst wird diese Aufgabe durch eine Vorrichtung gemäss den Merkmalen des Patentanspruchs 1. Vorteilhafte Ausgestaltungen der Vorrichtung sind in den abhängigen Ansprüchen umschrieben.

Mit der erfindungsgemässen Vorrichtung gelingt es, zwei oder mehrere identische Werkstücke gleichzeitig in exakt definierter Lage zu spannen und danach deren Bearbeitung ohne Umspannen nacheinander vorzunehmen, ohne weitere Rüstzeiten aufwenden zu müssen.

In einer besonders vorteilhaften Ausgestaltung der Erfindung können gleichzeitig auch vier, sechs oder mehr Werkstücke mit der erfindungsgemässen Vorrichtung auf einmal positioniert gespannt werden und die Werkstücke entweder gleichzeitig oder nacheinander spanabhebend bearbeitet werden. Das Spannen der Werkstücke erfolgt nach dem Einlegen in die Vorrichtung mit einer einzigen Spannvorrichtung, insbesondere mit einer Spannschraube für jeweils zwei Werkstücke oder mehr Werkstücke. Sämtliche Werkstücke sind mit der Spannvorrichtung gleichmässig und für die exakte Bearbeitung reproduzierbar genau gespannt gehalten. Die Rüstzeit, das heisst die Zeit, die benötigt wird, um zwei oder mehr Werkstücke auf der Maschine bzw. auf deren Teilapparat zu spannen, reduziert sich.

Die Bearbeitung einer Mehrzahl von in der Vorrichtung eingespannter Werkstücke lässt sich in einfacher Weise in die CNC-Steuerung der Werkzeugmaschine einbinden.

Ein weiterer Vorteil der Vorrichtung besteht darin, dass die Werkstücke in der Vorrichtung axial in Serie oder paarweise parallel hintereinander liegend auf der Werkzeugmaschine angeordnet sind. Dadurch lassen sich auch auf kleineren CNC-Werkzeugmaschinen mit entsprechend kleinem Durchmesser des Teilapparats gleichzeitig oder nacheinander mehrere Werkstücke bearbeiten, da diese nicht radial nebeneinander, z.B. auf dem Teilapparat angeordnet sind und dadurch allenfalls dessen Durchmesser überschreiten würden. Durch die Parallelspannung erreicht man eine äusserst genaue Spannung der Werkstücke.

Anhand von Ausführungsbeispielen wird die Erfindung näher erläutert. Es zeigen:
- Figur 1: einen Teilapparat einer Werkzeugmaschine (Werkzeugmaschine nicht dargestellt), mit einer erfindungsgemässen Spannvorrichtung mit zwei eingespannten Werkstücken,
- Figur 2: einen Teilapparat einer Werkzeugmaschine (Werkzeugmaschine nicht dargestellt), mit einer erfindungsgemässen Spannvorrichtung mit vier Werkstücken,
- Figur 3: einen Teilapparat einer Werkzeugmaschine (Werkzeugmaschine nicht dargestellt), mit einer erfindungsgemässen Spannvorrichtung mit sechs eingespannten Werkstücken,
- Figur 4: eine perspektivische Darstellung einer verstellbaren Backe der Spannvorrichtung,
- Figur 5: eine perspektivische Darstellung einer stationären Backe der Spannvorrichtung mit sichtbarer Auflagefläche auf den Teilapparat,
- Figur 6: eine perspektivische Darstellung der beiden Backen zusammengefügt und mit eingespannten Werkstücken,
- Figur 7: eine perspektivische Darstellung einer verstellbaren Backe mit sichtbarer Stirnfläche und Kopf der Spannvorrichtung in Gestalt einer Spannschraube,
- Figur 8: eine perspektivische Darstellung einer stationären Backe der Spannvorrichtung,
- Figur 9: die beiden Backen wie in Figur 7 und 8 dargestellt zusammengefügt mit eingespannten Werkstücken.
- Figur 10: eine perspektivische Ansicht des Teilapparat mit vier eingespannten Werkstücken und mit seitlichen Anschlägen und
- Figur 11: eine vergrösserte Darstellung des Bereichs A in Fig. 10 und
- Figur 12: eine Abtriebsanordnung und ein Gegenspitz einer Werkzeugmaschine sowie dazwischen eingespannt eine weitere Ausgestaltung einer Spannvorrichtung mit parallel nebeneinander eingespannten Werkstücken auf einem Träger.

Mit Bezugszeichen 1 ist schematisch als Würfel dargestellt ein Teilapparat 1 bezeichnet, auf der eine Planscheibe 3 drehbar um eine Achse A angeordnet ist. Die CNC-Maschine ist nicht dargestellt. Auf der Stirnfläche 5 der Planscheibe 3 des Teilapparats 1, welche als gelochte Scheibe ausgebildet ist und auf welcher die Spannvorrichtung 7 für Werkstücke 9 befestigbar ist, ist eine Spannvorrichtung 7 zum gleichzeitigen Spannen von zwei Werkstücken 9 befestigt. Die Einspannung der Werkstücke erfolgt auf Zug und nicht wie üblich auf Druck.

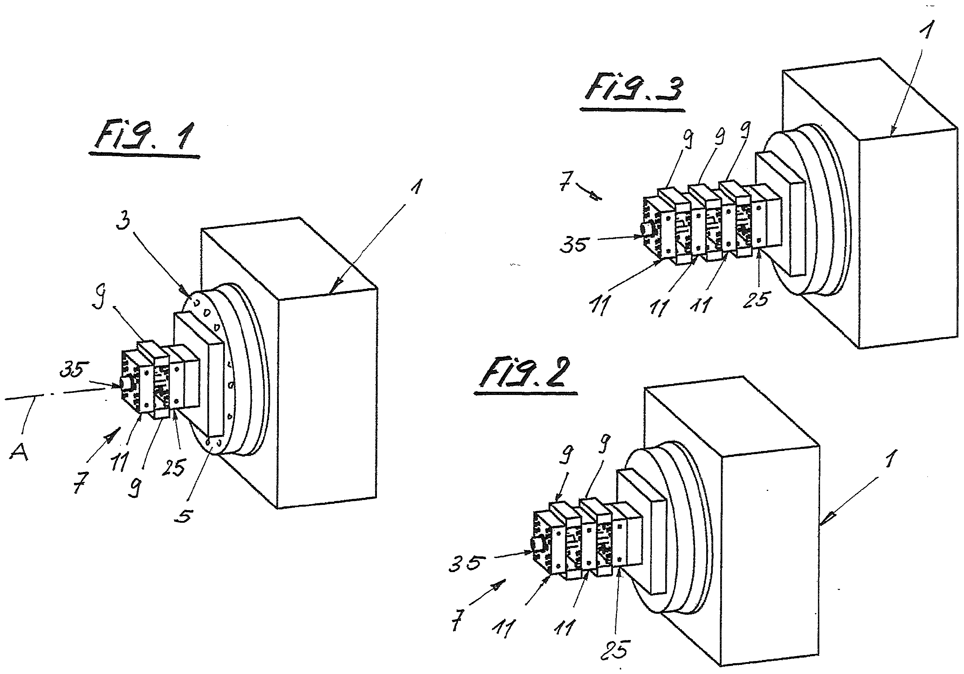

In Figur 2 ist die gleiche Anordnung sichtbar, jedoch ist die Spannvorrichtung 7 zum Spannen von vier Werkstücken 9 ausgebildet.

Figur 3 zeigt eine Spannvorrichtung 7, auf der sechs Werkstücke 9 gleichzeitig festgespannt werden können.

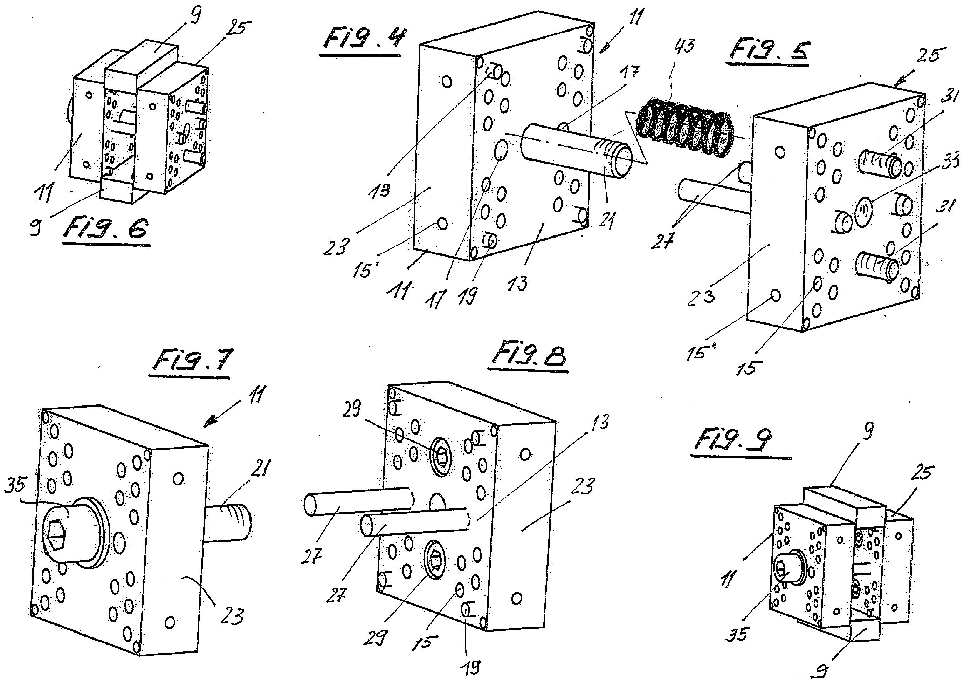

Nachfolgend werden die einzelnen Teile der Spannvorrichtungen 7 im Einzelnen erläutert. In Figur 4 ist in der perspektivischen Darstellung eine verstellbare Spannbacke, kurz verstellbare Backe 11, ersichtlich. Diese umfasst eine Metallplatte mit rechteckigem oder rundem Querschnitt. Auf der in Figur 4 ersichtlichen Stirnfläche 13 sind eine Anzahl von durchgehenden Bohrungen 15 sichtbar. Weiter sind beispielsweise zwei Durchgangsbohrungen 17 mit etwas grösserem Durchmesser vorhanden und im Bereich der vier Ecken der Backe 11 stehen je ein zylindrischer Bolzen 19 über die Stirnfläche 13 vor. Die zylindrischen Bolzen 19 können in geeignete Bohrungen eingesteckt oder in die Backe 11 eingeschraubt sein. Weiter durchdringt ein Spannelement 21 den Körper der verstellbaren Backe 11 in einer weiteren durchgehenden Bohrung.

Zusätzlich zu den Bohrungen 15 in der Stirnfläche 3 können weitere Sacklochbohrungen 15' oder Gewindebohrungen an den Seitenflächen 23 für Anschlagstifte ausserhalb der Spannfläche angeordnet sein.

Als Gegenstück zur verstellbaren Backe 11 wird in Figur 5 eine stationäre Backe 25 dargestellt. Deren geometrische Form entspricht derjenigen in Figur 4 und sie umfasst ebenfalls Bohrungen 15, und zwar in gleicher Anordnung wie in Figur 4 auf der verstellbaren Backe 11.

In der Ansicht der stationären Backe 25 in Figur 8 sind weiter zwei Führungsstangen 27 sichtbar, welche, wenn die beiden Backen 11 und 25 zusammengeführt werden, in die Durchgangsbohrungen 17 spielfrei einführbar sind. Weiter sind in Figur 8 zwei Köpfe 29 von Befestigungsschrauben 31 (Gewinde nicht dargestellt) sichtbar. Die Gewindeabschnitte der Befestigungsschrauben 31 sind in Figur 5 dargestellt. Weiter ist in den Figuren 5 und 8 auch eine Gewindebohrung 33 ausgebildet, in welcher das Spannelement 21, zum Beispiel in Gestalt einer Zugschraube 21 kämmt. Die Zugschraube 21 weist einen Schraubenkopf, vorzugsweise einen Imbusschraubenkopf 35 oder einen Sechskantkopf auf, mit welchem die Zugschraube in Drehung versetzt und dadurch die verstellbare Backe 11 gegen die stationäre Backe 25 gezogen bzw. von dieser entfernt werden kann.

In einer vorteilhaften Ausgestaltung der Vorrichtung sind zwischen den Backen 11 und 25 bzw. 25 und 25 Druckfedern 43 in Gestalt von Schraubenfedern eingesetzt. Die Druckfedern 43 können auf dem Schaft der Spannschraube 21 oder/und auf den Führungsstangen 27 aufgesetzt sein (vergleiche Figur 4 mit einer Druckfeder 43 für die Spannschraube 21). Die axiale Länge der Druckfedern 43 ist auf die Masse der einzuspannenden Werkstücke 9 abgestimmt, d.h. die Druckfeder 43 hält die Stirnflächen 13 der Backen 11, 25 bzw. 25, 25 in einem Abstand, der es ermöglicht Werkstücke 9 auf die Positionierstifte 19 aufzulegen. Bei Verwendung mehrerer verstellbaren Backen 11 wird die jeweils schwächste Feder 43 zwischen den Stirnflächen 13 des vom Teilapparat 1 am weitesten entfernten Backe 11 und der benachbarten Backe 11, die näher am Teilapparat 1 liegt, eingesetzt. Eine etwas stärkere Feder 43 wird nachfolgend zwischen den beiden benachbarten Backen 11 entweder auf die Spannschraube 21 oder auf die Führungsstangen 27 aufgeschoben. Die Druckfeder 43 mit der grössten Federkonstante wird zwischen die auf den Teilapparat 1 bzw. der Planscheibe 3 aufgesetzte stationäre Backe 25 und die benachbart liegende erste verstellbare Backe 11 eingesetzt.

Nachfolgend wird die Funktionsweise der Vorrichtung anhand eines Beispiels zum Spannen zweier Werkstücke gemäss den Figuren 1, 4 bis 9 beschrieben. Auf der Planscheibe 3 des Teilapparats 1 wird eine stationäre Backe 25 mithilfe zweier Befestigungsschrauben 29 befestigt. Die stationäre Backe 25 wird dabei konzentrisch zur Drehachse A des Teilapparats 1 montiert. Auf die nun präzise auf dem Teilapparat 3 sitzende Backe 25 wird eine verstellbare Backe 11 aufgeschoben, und zwar auf die beiden von der stationären Backe 25 lotrecht abstehenden Führungsstangen 27, die in die Durchgangsbohrungen 17 eingreifen. Die verstellbare Backe 11 ist nun axial spielfrei geführt und deren einander gegenüberliegenden Stirnflächen sind exakt parallel zueinander liegend und deren Abstand einstellbar. Mit der Spannschraube 21, die durch die verstellbare Backe 11 hindurch in die stationäre Backe 25 bzw. dort in die Gewindebohrung 33 eingreift, kann der Abstand der verstellbaren Backe 11 zum Teilapparat 1 verstellt werden.

Falls zwischen den Backen 25,11 und 25,25 Druckfedern 43 eingesetzt sind, so werden die Backen 11 beim Lösen der Spannschraube 21 mit einem Drehwerkzeug am Kopf 35 in gegenseitiger Distanz gehalten, die es ermöglicht, Werkstücke 9 auf die Positionierstifte 19 aufzulegen. Zuerst werden Werkstücke 9 auf die oben liegenden Positionierstifte 19 aufgelegt. Ein weiteres Werkstück 9 wird dann noch von Hand an der Unterseite der unten liegenden Positionierstifte 19 an den letzten beiden Backen 25 gehalten. Mit einem Schraubendreher wird die Spannschraube 21 soweit gedreht, bis das von unten an die Backen 11 herangeführte Werkstück 9 festgeklemmt wird, weil dort die schwächste Druckfeder 43 sich zuerst zusammenpressen lässt. Die näher am Teilapparat 1 liegende Feder 43 widersteht vorerst dieser Spannkraft durch die Spannschraube 21. Es kann nun von unten das nächste Werkstück 9 an die unten liegenden Positionierstifte 19 herangeführt, gehalten und durch Drehen an der Spannschraube 21 auch dieses Werkstück 9 festgeklemmt werden. Bei einer Vorrichtung zum Spannen von sechs Werkstücken 9 wird nun der letzte Platz zum Spannen, nämlich zwischen der stationären Backe 25 und der ersten verstellbaren Backe 11 von unten das Werkstück 9 an die Positionierstifte 19 herangeführt, gehalten und danach durch Spannen der Spannschraube 21 auch dieses festgeklemmt.

Nach diesem Auflege- und Positioniervorgang können die Werkstücke 9 durch die Bearbeitungsmaschine ohne umspannen bearbeitet werden. Nach der Bearbeitung wird die Spannschraube 21 sukzessive gelöst und es können zuerst die unten liegenden Werkstücke 9 in umgekehrter Reihenfolge abgenommen werden und danach die oben liegenden auf den Positionierstiften 19. Selbstverständlich kann die Vorrichtung auch ohne Druckfedern 43 betrieben werden, doch ist deren Handling dann natürlich nicht so einfach wie mit Druckfedern 43.

Das Ausrichten der Werkstücke 9, in den dargestellten Beispielen in horizontaler Richtung, kann durch Ausrichten, beispielsweise auf eine vertikale Seitenfläche der Backen 11, 25 oder durch Anschläge, die an den Seitenflächen 23 der Backen 11, 25 oder mindestens an einer der Seitenflächen 23 der Backen 11 oder 25 befestigt sind, erfolgen.

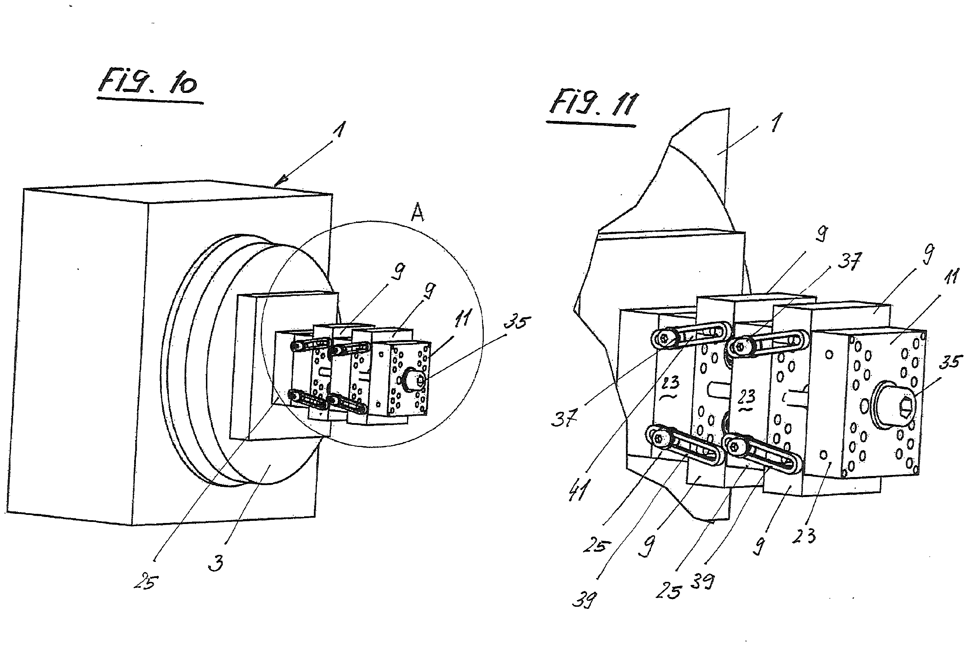

In den Figuren 10 und 11 sind an den Seitenflächen 23 der Backen 25 und 11 beispielsweise Halteschrauben 37 in entsprechende Gewindebohrungen 15' in den Seitenflächen 23 eingedreht und halten Positionierelemente 39. Die Positionierelemente 39 sind in den dargestellten Beispielen mit einem längs verlaufenden Schlitz 41 versehene Stäbe. Die Halteschrauben 37 durchdringen den Schlitz 41 und die Schraubköpfe, vorzugsweise Sechskant- oder Imbusschraubköpfe, liegen an den beiden seitlich des Schlitzes 41 befindlichen Stegen an und halten die Positionierelemente 39 in der gewünschten, im Wesentlichen horizontalen oder leicht zur Horizontalen geneigten, Lage. Mit den Positionierelementen 39 kann die Position von Werkstücken 9 in horizontaler Richtung exakt festgelegt werden. Damit ist die Position der Werkstücke 9 nicht nur durch die Positionierstifte 19 in vertikaler Richtung festgelegt, sondern die Werkstücke 9 werden auch einseitig angeschlagen, folglich in horizontaler Richtung definitiv positioniert, bevor die Spannschraube 21 an ihrem Kopf 35 festgezogen und dadurch die Werkstücke 9 zwischen den Backen 11, 25 festgeklemmt werden.

Die derart eingespannten Werkstücke lassen sich anschliessend entweder gleichzeitig oder nacheinander durch die spanabhebenden Werkzeuge, die in einer CNC-Maschine montiert sind, bearbeiten. Eine Bearbeitung ist über einen Winkel von 360° möglich. Mit einer Einspannung von zwei Werkstücken 9 mit nur einer Spannschraube 21 ist es folglich möglich, zwei Werkstücke in einer Einspannung zu bearbeiten.

In der Figur 2 sind nicht nur eine stationäre Backe 25 und eine verschiebbare Backe 11 eingesetzt, sondern auf die erste verschiebbare Backe 11 ist eine weitere verschiebbare Backe 11 in gleicher Weise aufgesetzt und es können dadurch vier Werkstücke mit einer einzigen Aufspannung durch Zug auf der Vorrichtung 1 festgehalten und bearbeitet werden.

Im dritten Ausführungsbeispiel gemäss der Figur 3 sind drei verstellbare Backen 11 in Serie angeordnet, wodurch sechs Werkstücke 9 in einer Aufspannung bearbeitet werden können. Da die Aufspannung in Serie auf der Achse A des Teilapparats 3 erfolgt, lassen sich auf einer kleineren CNC-Maschine eine Mehrzahl von Werkstücken in einer Aufspannung bearbeiten. Würden diese sechs Werkstücke alle einzeln auf dem Teilapparat 3 befestigt, so müsste ein wesentlich grösserer Teilapparat 3 eingesetzt werden, welcher nur auf grösseren CNC-Maschinen vorhanden ist. Der Vorteil Spannvorrichtung sind kleinere Einbaumasse mit grosser Spannkraft (Spannkraft auf Zug parallel keine Verspannung).

Je nach Ausmass der Werkstücke 9 insbesondere in axialer Richtung werden unterschiedlich lange Spannschrauben 21 eingesetzt. Dies trifft für alle drei Ausführungsbeispiele zu.

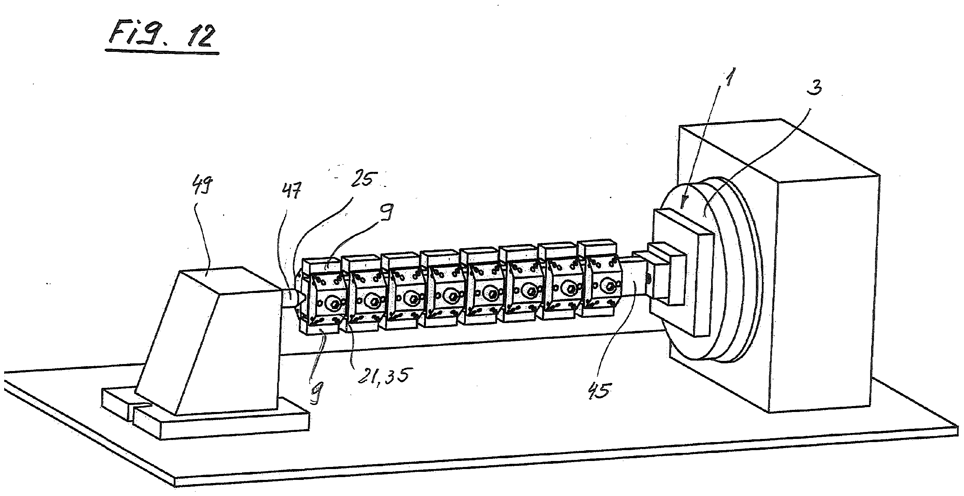

In einer weiteren Ausgestaltung der Spannvorrichtung gemäss Figur 12 erfolgt das Verspannen der Werkstücke nicht axial, das heisst in Richtung der Drehachse der Werkzeugmaschine, sondern rechtwinklig dazu.

Auf der Abtriebsseite der Werkzeugmaschine, in der Figur ist beispielsweise ein Teilapparat 1 als Abtriebselement dargestellt, wird ein stabförmiger Träger 45 stirnseitig drehfest angeordnet. Das gegenüberliegende Ende des Trägers 45 wird von einem Gegenspitz 47 einer Stützvorrichtung 49 getragen. Auf einer Längsseite des Trägers 45 sind beabstandet eine Mehrzahl, beispielsweise acht stationäre Backen 25 befestigt, welche den Träger 45 bzw. dessen Längskanten überragen. Verbunden durch je eine Spannschraube 21, von denen man jeweils nur den Kopf 35 erkennen kann, ist eine verstellbare Backe 11 angeordnet. Die Parallelführung der verstellbaren Backe 11 bezüglich des Trägers 45 erfolgt wie bei den oben beschriebenen Beispielen durch Führungsstangen 27, welche hier den Träger 45 durchdringen.

In Figur 12 ist ersichtlich, dass jeweils zwischen der stationären Backe 25 und der verstellbaren Backe 11 oben und unten je ein Werkstück 9 eingespannt gehalten werden kann. Wie im Beispiel gemäss Figur 4 weiter ersichtlich, können nacheinander oder gleichzeitig acht Werkstücke 9 bearbeitet werden und nach einer Drehung des Teilapparats 1 bzw. der Planscheibe 3 des Teilapparats um 180°, können die gegenüberliegend gespannten Werkstücke 9 einer Bearbeitung unterzogen werden. Es ist selbstverständlich auch möglich, den Drehwinkel der Planscheibe 3 beliebig zu wählen, so dass nicht nur senkrecht zu den Oberflächen der eingespannten Werkstücke verlaufende Bohrungen, Gewinde oder Flächen erzeugt werden können.

Besonders vorteilhaft an dieser Ausgestaltung der Erfindung ist die Tatsache, dass das Aufspannen der Werkstücke 9 auf dem Träger 45 nicht nur direkt an der Werkzeugmaschine, sondern ausserhalb dieser erfolgen kann und danach jeweils, wie im hier beschriebenen Beispiel, 16 Werkstücke gleichzeitig auf der Werkzeugmaschine angeordnet werden können. Die Rüstzeit bzw. Stillstandszeit der Maschine wird dadurch auf ein Minimum gesenkt. Gleichzeitig kann erreicht werden, dass durch die gleichzeitige Aufspannung der Werkstücke, diese mit optimaler Präzision bearbeitet werden können.

## Patentansprüche

1. Vorrichtung zum gleichzeitigen Spannen mehrerer Werkstücke auf einem Teilapparat (1) mit einer Planscheibe (3) auf einer Werkzeugmaschine für eine spanabhebende Bearbeitung, umfassend eine erste stationäre Backe (25) und eine relativ zur ersten verstellbare zweite Backe (11) zum Spannen/Festhalten eines Werkstücks zwischen den Backen (25,11) während der Bearbeitung, wobei die stationäre Backe (25) erste Mittel (31) zu deren spielfreien Befestigung an der Werkzeugmaschine auf dem Teilapparat (1) umfasst,
**dadurch gekennzeichnet,**
**dass** die stationäre Backe (25) zweite Mittel (27) zur spielfreien und parallelen Führung der zweiten verstellbaren Backe (11) umfasst und
**dass** die mit dem Teilapparat (1) verbindbare stationäre Backe (25) und die mit der stationären Backe (25) verbundene verstellbare Backe (11) mit einem Spannelement (21) zum Spannen auf Zug miteinander verbunden sind und eine Parallelspannung zum gleichzeitigen Klemmen zweier Werkstücke zwischen den beiden Backen (11,25) erzeugbar machen, bei der zwei identische Werkstücke gleichzeitig in exakt definierter Lage gespannt sind.

2. Vorrichtung nach Anspruch 1, **dadurch gekennzeichnet, dass** die feststehende Backe (25) auf einem stabförmigen Träger (45) aufgesetzt ist und der Träger (45) stirnseitig mit dem Teilapparat (1) der Werkzeugmaschine verbindbar ausgebildet ist.

3. Vorrichtung nach einem der Ansprüche 1 oder 2, **dadurch gekennzeichnet, dass** das Spannelement (21) eine Schraube oder Spindel umfasst, mit welcher der relative Abstand der beiden Backen (11,25) verstellbar ist.

4. Vorrichtung nach einem der Ansprüche 1 oder 2, **dadurch gekennzeichnet, dass** das erste Mittel eine oder mehrere die stationäre Backe (25) durchdringende Schrauben (31) zum Befestigen am Teilapparat (1) umfasst.

5. Vorrichtung nach einem der Ansprüche 1 bis 4, **dadurch gekennzeichnet, dass** an den einander gegenüberliegenden Stirnflächen (13) der Backen (11,25) Bohrungen (15) zum Einsetzen von über die Stirnflächen (13) hinausragender Positionierstifte (19) angeordnet sind.

6. Vorrichtung nach Anspruch 5, **dadurch gekennzeichnet, dass** an den Seitenflächen 23 der Backen (11,25) weitere Gewindebohrungen (15') zum Anschrauben von Positionier- oder Anschlagstiften ausgebildet sind.

7. Vorrichtung nach einem der Ansprüche 1 bis 6, **dadurch gekennzeichnet, dass** die zweiten Mittel zum parallelen Führen der Backen (11,25) zylindrische Führungsstangen (27) umfassen, welche fest mit einer der Backen (11,25) verbunden sind und in Durchgangsbohrungen (17) an der gegenüberliegenden Backe (11,25) eingreifen und spielfrei geführt sind.

8. Vorrichtung nach einem der Ansprüche 1,2, 6 und 7, **dadurch gekennzeichnet, dass** in Serie zur ersten verstellbaren Backe (11) mindestens eine weitere verstellbare Backe (11) an den Führungsstangen (27), welche an der stationären Backe (25) befestigt sind, verschiebbar gehalten sind und vom Spannelement (21) durchdrungen wird.

9. Vorrichtung nach einem der Ansprüche 1 bis 8, **dadurch gekennzeichnet, dass** an der stationären Backe (25) und/oder den verstellbaren Backen (11) an deren Seitenflächen (23) Positionierelemente (39) angeordnet sind, welche die Stirnflächen (13) der Backen (11,25) überragen.

10. Vorrichtung nach Anspruch 9, **dadurch gekennzeichnet, dass** die Positionierelemente (39) von einer Halteschraube (37) in gewünschter Position gehalten werden und dass die Halteschrauben (37) in Bohrungen (15') mit Gewinden in den Seitenflächen (23) der Backen (11,25) einschraubbar sind.

11. Vorrichtung nach einem der Ansprüche 1 bis 10, **dadurch gekennzeichnet dass** zwischen den axial benachbart liegenden Backen (25,11;25,25,25,25) Druckfedern (43) auf dem Schaft der Spannschraube (21) und/oder auf einer Führungsstange (27) aufgesetzt und gehalten sind.

12. Vorrichtung nach Anspruch 11, **dadurch gekennzeichnet, dass** die Druckfedern (43) unterschiedliche Federkonstanten aufweisen.

## Claims

1. An apparatus for simultaneous clamping of a plurality of workpieces on an indexing attachment (1) having a face plate (3) on a machine tool for machining, comprising a first stationary jaw (25) and a second jaw (11) which is adjustable relative to the first jaw for clamping/securing a workpiece between the jaws (25,11) during the machining, wherein the stationary jaw (25) comprises first means (31) for fastening thereof to the machine tool on the indexing attachment (1) without play,
**characterized in that**
the stationary jaw (25) comprises second means (27) for parallel guidance of the second adjustable jaw (11) without play, and
the stationary jaw (25) which can be connected to the indexing attachment (1) and the adjustable jaw (11) connected to the stationary jaw (25) are connected to one another with a tensioning element (21) for clamping by tension and make it possible to produce a parallel clamping for simultaneous gripping of two workpieces between the two jaws (11, 25), in which two identical workpieces are simultaneously clamped in an exactly defined position.

2. The apparatus according to Claim 1, **characterized in that** the fixed jaw (25) is mounted on a bar-shaped carrier (45) and the carrier (45) is configured so that it can be connected on the front side to the indexing attachment (1) of the machine tool.

3. The apparatus according to any one of Claims 1 or 2, **characterized in that** the tensioning element (21) comprises a screw or spindle with which the relative distance of the two jaws (11, 25) can be adjusted.

4. The apparatus according to any one of Claims 1 or 2, **characterized in that** the first means comprises one or more screws (31) penetrating the stationary jaw (25) for fastening to the indexing attachment (1).

5. The apparatus according to any one of Claims 1 to 4, **characterized in that** bores (15) for inserting positioning pins (19) projecting beyond the end faces (13) are arranged on the opposing end faces (13) of the jaws (11, 25) .

6. The apparatus according to Claim 5, **characterized in that** further threaded bores (15') for screwing on positioning or stop pins are configured on the side faces 23 of the jaws (11, 25).

7. The apparatus according to any one of Claims 1 to 6, **characterized in that** the second means for parallel guiding of the jaws (11, 25) comprise cylindrical guide rods (27) which are firmly connected to one of the jaws (11, 25) and engage in through-bores (17) on the opposite jaw (11, 25) and are guided without play.

8. The apparatus according to any one of Claims 1, 2, 6 and 7, **characterized in that** at least one further adjustable jaw (11) is displaceably held on the guide rods (27), which are fastened to the stationary jaw (25), and penetrated by the tensioning element (21) in series with the first adjustable jaw (11).

9. The apparatus according to any one of Claims 1 to 8, **characterized in that** positioning elements (39), which protrude beyond the end faces (13) of the jaws (11, 25), are arranged on the stationary jaw (25) and/or the adjustable jaws (11) on the side faces (23) thereof.

10. The apparatus according to Claim 9, **characterized in that** the positioning elements (39) are held by a retaining screw (37) in the desired position and the retaining screws (37) can be screwed into bores (15') having threads in the side faces (23) of the jaws (11, 25).

11. The apparatus according to any one of Claims 1 to 10, **characterized in that** compression springs (43) are mounted and held on the shaft of the tensioning screw (21) and/or on a guide rod (27) between the axially adjacent jaws (25, 11, 25, 25, 25, 25).

12. The apparatus according to Claim 11, **characterized in that** the compression springs (43) have different spring constants.

## Revendications

1. Dispositif pour le serrage simultané de plusieurs pièces sur un appareil diviseur (1) avec un disque plan (3) sur une machine-outil pour un usinage par enlèvement de copeaux, comprenant une première mâchoire stationnaire (25) et une deuxième mâchoire (11) réglable par rapport à la première pour le serrage/le maintien d'une pièce entre les mâchoires (25, 11) pendant l'usinage, la mâchoire stationnaire (25) comprenant des premiers moyens (31) pour sa fixation sans jeu sur la machine-outil sur l'appareil diviseur (1),
**caractérisé en ce que**
la mâchoire stationnaire (25) comprend des deuxièmes moyens (27) pour le guidage sans jeu et parallèle de la deuxième mâchoire réglable (11) et
la mâchoire stationnaire (25) pouvant être reliée à l'appareil diviseur (1) et la mâchoire réglable (11) reliée à la mâchoire stationnaire (25) sont reliées entre elles par un élément de serrage (21) pour le serrage en traction et permettent de générer un serrage parallèle pour le serrage simultané de deux pièces entre les deux mâchoires (11, 25), dans lequel deux pièces identiques sont serrées simultanément dans une position exactement définie.

2. Dispositif selon la revendication 1, **caractérisé en ce que** la mâchoire fixe (25) est montée sur un support (45) en forme de barre et le support (45) est configuré pour pouvoir être relié frontalement à l'appareil diviseur (1) de la machine-outil.

3. Dispositif selon l'une quelconque des revendications 1 ou 2, **caractérisé en ce que** l'élément de serrage (21) comprend une vis ou une broche avec laquelle la distance relative des deux mâchoires (11, 25) peut être réglée.

4. Dispositif selon l'une quelconque des revendications 1 ou 2, **caractérisé en ce que** le premier moyen comprend une ou plusieurs vis (31) traversant la mâchoire stationnaire (25) pour la fixation à l'appareil diviseur (1).

5. Dispositif selon l'une quelconque des revendications 1 à 4, **caractérisé en ce que** des alésages (15) sont agencés sur les faces frontales (13) opposées des mâchoires (11, 25) pour l'insertion de goupilles de positionnement (19) dépassant des faces frontales (13).

6. Dispositif selon la revendication 5, **caractérisé en ce que** d'autres alésages filetés (15') sont formés sur les faces latérales 23 des mâchoires (11, 25) pour le vissage de goupilles de positionnement ou de butée.

7. Dispositif selon l'une quelconque des revendications 1 à 6, **caractérisé en ce que** les deuxièmes moyens pour le guidage parallèle des mâchoires (11, 25) comprennent des tiges de guidage cylindriques (27), qui sont reliées de manière fixe à l'une des mâchoires (11, 25) et s'engagent dans des alésages traversants (17) sur la mâchoire opposée (11, 25) et sont guidées sans jeu.

8. Dispositif selon l'une quelconque des revendications 1, 2, 6 et 7, **caractérisé en ce que**, en série avec la première mâchoire réglable (11), au moins une autre mâchoire réglable (11) est maintenue de manière coulissante sur les tiges de guidage (27) qui sont fixées à la mâchoire stationnaire (25) et est traversée par l'élément de serrage (21).

9. Dispositif selon l'une quelconque des revendications 1 à 8, **caractérisé en ce que** des éléments de positionnement (39) sont agencés sur la mâchoire stationnaire (25) et/ou sur les mâchoires réglables (11) sur leurs faces latérales (23), qui dépassent les faces frontales (13) des mâchoires (11, 25).

10. Dispositif-selon la revendication 9, **caractérisé en ce que** les éléments de positionnement (39) sont maintenus dans la position souhaitée par une vis de maintien (37) et **en ce que** les vis de maintien (37) peuvent être vissées dans des alésages (15') avec des filets dans les faces latérales (23) des mâchoires (11, 25).

11. Dispositif selon l'une quelconque des revendications 1 à 10, **caractérisé en ce que** des ressorts de compression (43) sont placés et maintenus sur l'arbre de la vis de serrage (21) et/ou sur une tige de guidage (27) entre les mâchoires (25, 11, 25, 25, 25) axialement adjacentes.

12. Dispositif selon la revendication 11, **caractérisé en ce que** les ressorts de compression (43) présentent des constantes de ressort différentes.
